# EUROPÄISCHE PATENTSCHRIFT

(11) **EP 2 782 103 B1**
(45) Veröffentlichungstag und Bekanntmachung des Hinweises auf die Patenterteilung: **19.06.2019**
(21) Anmeldenummer: 13159775.9
(22) Anmeldetag: 18.03.2013
(51) Int. Cl.: H01B 3/30, H02K 3/30, H02K 3/40

(54) **Lackdraht**
Enameled wire
Fil émaillé

(43) Veröffentlichungstag der Anmeldung: 24.09.2014
(73) Patentinhaber: Schwering & Hasse Elektrodraht GmbH, 32676 Lügde (DE)
(72) Erfinder: Haase, Roxana, Dr., 31812 Bad Pyrmont (DE); Reicher, Johann, Ing., 31848 Bad Münder (DE)
(74) Vertreter: Rohmann, Michael

(56) Entgegenhaltungen:
- EP-A1- 2 328 154
- EP-A2- 2 579 275
- WO-A1-99/08288

## Beschreibung

Die Erfindung betrifft einen Lackdraht, insbesondere Kupferlackdraht, wobei eine Oberfläche eines eine Seele des Lackdrahts bildenden Wickeldrahts vollständig bzw. im Wesentlichen vollständig mit einer Primärisolation aus einem Lackpolymer beschichtet ist und wobei eine äußere Oberfläche der Primärisolation bereichsweise mit einer Sekundärisolation aus einem Imprägnierungspolymer beschichtet ist.

Lackdrähte der vorstehend genannten Art sind aus der Praxis und aus dem Stand der Technik grundsätzlich bekannt. Die bekannten Lackdrähte werden zunächst mit einer Primärisolation versehen. Im Zuge der Verarbeitung werden daraus mit unterschiedlichen Wickeltechniken Wicklungen zur Erzeugung von Magnetfeldern hergestellt. Je nach Anwendungsfall werden diese Wicklungen zur Erzielung einer besseren Wärmeabfuhr, besserer elektrischer Festigkeit und besserer mechanischer Beständigkeit durch Imprägnierung mit einer Sekundärisolation behandelt. EP 2 579 275 A2 beschreibt beispielsweise einen isolierten Draht mit einer Grundisolierungsschicht aus einem Polyamidimid und einer äußeren Isolierungsschicht aus Polyimid. Die EP 2 328 154 A1 lehrt einen Draht mit einer äußeren Extrusionsschicht aus Polyphenylensulfid, die auf eine innere Drahtbeschichtung aufgebracht wird. WO 99/08288 beschreibt ebenfalls einen Lackdraht mit einer Grundlackschicht und einer Decklackschicht, wobei die Decklackschicht Titandioxid enthält.

Abhängig vom gewählten Wickelverfahren sind mit herkömmlichen Lackdrähten bestimmte Packungsdichten (Nutfüllfaktoren) und damit Wirkungsgrade der elektrischen Geräte erzielbar. Durch Einsatz gleitoptimierter Lackdrähte, die beispielsweise in DE 2010 039 168 A1 beschrieben sind, lässt sich die Packungsdichte weiter erhöhen, mit dem Nachteil einer eventuell verminderten Haftung zwischen Primär- und Sekundärisolation und den sich daraus ergebenden erheblichen Nachteilen, die unter anderem aufgrund von Lufteinschlüssen zum Versagen der Geräte im Einsatzfall führen können.

Der Erfindung liegt daher das technische Problem zugrunde, einen Lackdraht der eingangs genannten Art anzugeben, mit dem hohe Packungsdichten bei elektrischen Wicklungen erzielbar sind, der sich durch eine hohe mechanische Beständigkeit und elektrische Festigkeit auszeichnet und der problemlos und insbesondere ohne Anwendung äußerer Gleitsubstanzen verwickelbar ist. Weiterhin liegt der Erfindung das technische Problem zugrunde, ein Verfahren zur Herstellung einer mit diesem Lackdraht gewickelten Spule und Aufbringung einer Sekundärisolation anzugeben.

Zur Lösung des technischen Problems lehrt die Erfindung einen Lackdraht der eingangs genannten Art, wobei bereichsweise zwischen der Primärisolation und der Sekundärisolation eine Haftvermittlerschicht aus einem Haftvermittler angeordnet ist, wobei das Imprägnierungspolymer zumindest eine aus der Gruppe "Polyesterimidharz, ungesättigtes Polyesterharz, Silikonharz, silikonhaltiger Kunststoff, Silikonkautschuk, Epoxidharz, Polyester-Melamin modifiziertes Harz, Polyurethan, Alkyd-/Phenolharz" ausgewählte Komponente beinhaltet und wobei der Haftvermittler zumindest eine aus der Gruppe "Polyesterharz, Polyolefin, Polyurethan, organisch funktionalisiertes Silan, aminofunktionelles Alkoxysilan, Polyethylenimin, aromatisches Polyethylenimin, aromatisches Polyisocyanurat, Epoxidharz, Silan, Siloxan, Aminosiloxan" ausgewählte Komponente beinhaltet. Es ist möglich, dass durch den Haftvermittler die Temperaturbeständigkeit und/oder die Teilentladungsbeständigkeit des Lackdrahts verbessert wird.

Vorzugsweise wird der erfindungsgemäße Lackdraht zur Herstellung von Wickelkörpern, insbesondere von gegebenenfalls wickelkernfreien Spulen verwendet. Zweckmäßigerweise ist der Wickeldraht ein Kupferwickeldraht oder ein Aluminiumwickeldraht. Es ist möglich, dass der Wickeldraht einen runden bzw. im Wesentlichen runden Querschnitt oder einen langgestreckten bzw. ovalen Querschnitt aufweist.

Gemäß einer Ausführungsform weist die Primärisolation zumindest eine Schicht aus dem Lackpolymer auf. Grundsätzlich ist es möglich, dass die Primärisolation zumindest zwei und vorzugsweise eine Mehrzahl bzw. Vielzahl von Schichten vorzugsweise aus dem Lackpolymer enthält. Beispielsweise ist die Primärisolation aus bis zu 30 vorzugsweise gleichen bzw. im Wesentlichen gleichen Lackpolymerschichten gebildet. Es liegt im Rahmen der Erfindung, dass die Primärisolation aus einer Mehrzahl bzw. Vielzahl von Lackpolymerschichten gebildet ist, wobei zumindest zwei und vorzugsweise alle Schichten der Primärisolation voneinander verschieden sind. Gemäß einer bewährten Ausführungsform nehmen Dicken der die Primärisolation bildenden Schichten mit zunehmendem Abstand der einzelnen Schichten von dem Wickeldraht ab. Besonders bevorzugt erstreckt sich die Primärisolation über die vollständige bzw. ungefähr vollständige Länge des Wickeldrahts und vorzugsweise umgibt die Primärisolation den Wickeldraht im Rahmen der Erfindung vollständig bzw. im Wesentlichen vollständig. Die Primärisolation bildet zweckmäßigerweise einen den Wickeldraht vollständig umgebenden Mantel.

Vorteilhafterweise erstreckt sich die Sekundärisolation lediglich über einen Teil der Länge des Wickeldrahts. Gemäß einer Ausführungsform erstreckt sich die Sekundärisolation über den größten Teil der Länge des Wickeldrahts und empfohlenermaßen über die vollständige bzw. im Wesentlichen vollständige Länge des Wickeldrahts. Es empfiehlt sich, dass sich die Sekundärisolation lediglich über einen Umfangsabschnitt des Wickeldrahts erstreckt. Zweckmäßigerweise ist ein Umfangsabschnitt des Wickeldrahts vorzugsweise sekundärisolationsfrei ausgebildet. Grundsätzlich ist es möglich, dass die Sekundärisolation lediglich eine Schicht und vorzugsweise mehrere Schichten eines Imprägnierungspolymers aufweist. Gemäß einer Ausführungsform ist die Sekundärisolation aus einer Mehrzahl beispielsweise verschiedener Schichten aufgebaut.

Besonders bevorzugt ist die Haftvermittlerschicht bzw. ist der Haftvermittler lediglich auf den Bereichen der äußeren Oberfläche der Primärisolation angeordnet, welche Bereiche mit der Sekundärisolation beschichtet sind. Äußere Oberfläche der Primärisolation meint im Rahmen der Erfindung eine dem Wickeldraht abgewandte Oberfläche der Primärisolation.

Gemäß einer bevorzugten Ausführungsform umschließt die Haftvermittlerschicht die Primärisolation vollständig bzw. im Wesentlichen vollständig, wobei bevorzugt die Sekundärisolation die Haftvermittlerschicht vollständig bzw. im Wesentlichen vollständig umschließt.

Es liegt im Rahmen der Erfindung, dass der Haftvermittler zumindest eine aus der Gruppe "organisches Polymer, anorganisches Polymer, anorganisches Salz" ausgewählte Komponente enthält. Erfindungsgemäß enthält der Haftvermittler zumindest eine aus der Gruppe "Polyesterharz, Polyolefin, Polyurethan, organisch funktionalisiertes Silan, aminofunktionelles Alkoxysilan, Polyethylenimin, aromatisches Polyisocyanurat, Epoxidharz, Silan, Siloxan, Aminosiloxan" ausgewählte Komponente. Vorzugsweise ist das Polyolefin ein modifiziertes Polyolefin, bevorzugt ein modifiziertes Polypropylen.

Das modifizierte Polyolefin ist beispielsweise ein Alkohol-modifiziertes und/oder carboxyliertes und/oder Silan-modifiziertes Polyolefin. Es ist möglich, dass das Polyolefin chloriert oder chlorfrei ist. Gemäß einer Ausführungsform ist das organisch funktionalisierte Silan ein Silan mit der Strukturformel 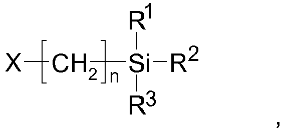 wobei n vorzugsweise 0 bis 3 ist. Zweckmäßigerweise sind die Reste R¹, R² und R³ Hydroxy, Alkyl oder Alkoxygruppen, wobei die Reste R¹, R² und R³ gleich oder voneinander veschieden sein können. Es liegt im Rahmen der Erfindung, dass X eine funktionelle Gruppe, vorzugsweise eine aus der Gruppe "Vinylgruppe, Methacryloxygruppe, Glycidoxygruppe, epoxyfunktionalisierte Gruppe, Aminogruppe, Harnstoffgruppe, Thiolgruppe, Isocyanatogruppe" ausgewählte funktionelle Gruppe ist.

Gemäß einer Ausführungsform weist das aminofunktionelle Alkoxysilan eine der beiden nachfolgenden Strukturformeln auf: 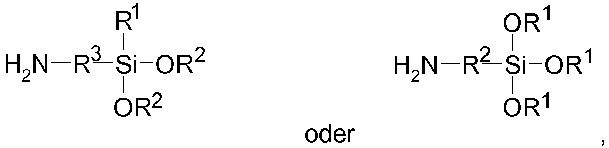 wobei die Reste R¹, R² und R³ unabhängig voneinander aus der Gruppe "Alkylrest, Methylrest, Ethylrest, Propylrest" ausgewählt sind. Die Reste R¹, R² und R³ können gleich oder voneinander verschieden sein.

Das aromatische Polyisocyanurat kann ein Toluylendiisocyanat (TDI)- oder Diphenylmethandiisocyanat (MDI)-basiertes Polyisocyanurat sein.

Vorteilhafterweise weist das Aminosiloxan eine der folgenden Strukturformeln auf: 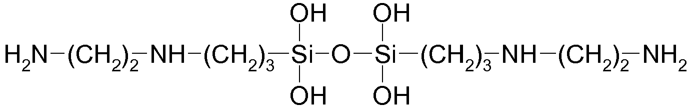 oder 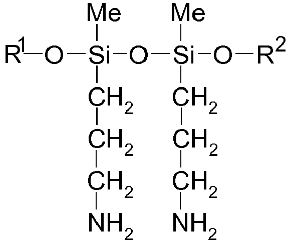 wobei die Reste R¹ und R² ein Wasserstoffatom oder ein Alkylrest sind. Die Reste R¹ und R² können gleich oder voneinander verschieden sein. Gemäß einer Ausführungsform weist das Aminosiloxan die Strukturformel 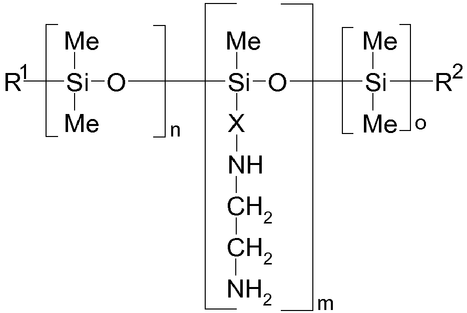 auf, wobei die Reste R¹ und R² gleich oder voneinander verschieden sind und vorzugsweise eine Hydroxygruppe, eine Alkylgruppe oder eine Alkoxygruppe sind. Die funktionelle Gruppe X kann eine Alkylengruppe, vorzugsweise eine Methylengruppe oder Ethylengruppe oder Propylengruppe sein.

Vorzugsweise ist das anorganische Salz ein Oxid und/oder ein Nitrit und/oder ein Silikat und/oder ein Carbonat. Vorzugsweise ist das Silikat ein Alumosilikat und zweckmäßigerweise ein Schichtsilikat. Beispielsweise ist das Schichtsilikat Talk. Es ist möglich, dass das Carbonat ein Calciumcarbonat und bevorzugt Kreide ist. Besonders bevorzugt besteht das anorganische Salz im Wesentlichen aus Zinkoxid. Gemäß einer Ausführungsform weist das anorganische Salz eine Kristallgröße auf, welche Kristallgröße beispielsweise mehrere Nanometer bis wenige Mikrometer beträgt. Die Kristalle des anorganischen Salzes können eine Größe von 5 nm bis 400 µm aufweisen. Zweckmäßigerweise weisen die anorganischen Salze bzw. Kristalle zumindest zwei starre Arme auf, welche Arme in einem Winkel von vorzugsweise mehr oder weniger als 180° aneinanderstoßen. Es hat sich als vorteilhaft herausgestellt, dass das anorganische Salz gewinkelte und vorzugsweise als Tetrapoden ausgebildete Kristalle enthält. Tetrapode meint insbesondere, dass die Kristalle vorzugsweise vier starre Arme aufweisen, die von einem zentralen Punkt des Kristalls ausgehen. Besonders bevorzugt weisen die starren Arme in Richtung der Ecken eines virtuellen Tetraeders, in dessen Mittelpunkt sich der Kern des Kristalls befindet. Die starren Arme weisen vorzugsweise jeweils eine Länge von 2 µm bis 200 µm, bevorzugt von 30 bis 200 µm und einen Durchmesser von beispielsweise 0,1 µm bis 14 µm, empfohlenermaßen von 0,5 µm bis 14 µm auf. Zweckmäßigerweise ist ein Aspektverhältnis der starren Arme größer als 10, wobei das Aspektverhältnis empfohlenermaßen als Quotient aus der Länge eines starren Arms zu einem Durchmesser dieses starren Arms definiert ist.

Gemäß einer bewährten Ausführungsform umfasst das Lackpolymer zumindest eine aus der Gruppe "Polyurethan, Polyesterimid, Polyester, Polyamidimid, Polyamid, Polyimid, Imid-modifiziertes Polyamidimid, Wachs-modifiziertes Polyamidimid, Polytetrafluorethylen-modifiziertes Polyamidimid, Schichtsilikat-modifizierter Lack" ausgewählte Komponente. Es liegt im Rahmen der Erfindung, dass das Polyesterimid ein Tris-Hydroxyethylisocyanurat-Polyesterimid (THEIC-Polyesterimid) umfasst. Besonders bevorzugt ist das Polyesterimid ein THEIC-Polyesteramidimid. Gemäß einer Ausführungsform enthält der Polyester einen Tris-Hydroxyethylisocyanurat Polyester (THEIC-Polyester). Besonders bevorzugt ist der Polyester ein THEIC-Polyester. Vorteilhafterweise ist das Polyamid ein aliphatisches und/oder aromatisches Polyamid. Es ist möglich, dass zwischen der Primärisolation und dem Wickeldraht zumindest eine zusätzliche Adhäsionsschicht angeordnet ist. Die Adhäsionsschicht ist vorteilhafterweise aus einem Adhäsionsmaterial gebildet, welches Adhäsionsmaterial bevorzugt identisch mit dem Haftvermittler ist. Es ist möglich, dass das Adhäsionsmaterial von dem Haftvermittler verschieden ist. Die Primärisolation zeichnet sich durch einen geringen Gleitreibungskoeffizienten aus, so dass vorzugsweise bei der Verarbeitung eines erfindungsgemäßen Lackdrahtes Wicklungen hoher Packungsdichten des Lackdrahtes erzielbar sind. Aufgrund des geringen Gleitreibungskoeffizienten der Primärisolation wird sichergestellt, dass beim Wickelprozess die Wicklungen einer weiteren Wicklungslage des mit der Primärisolation beschichteten Wickeldrahts in die zwischen zwei nebeneinander liegenden, mit der Primärisolation beschichteten Wickeldrähten der darunter befindlichen Wicklungslage ausgebildeten Vertiefungen gleitet. Auf diese Weise sind hohe Packungsdichten problemlos erzielbar. Vorzugsweise ist ein Reibungskoeffizient µd der erfindungsgemäßen Primärbeschichtung kleiner oder gleich 0,130. Zweckmäßigerweise ist der Reibungskoeffizient µd durch eine Reibungsprüfung Draht/Stahl gemäß DIN EN 60851-3 Verfahren B bestimmbar.

Erfindungsgemäß beinhaltet das Imprägnierungspolymer zumindest eine aus der Gruppe "Polyesterimid, ungesättigtes Polyesterharz, Silikonharz, silikonhaltiger Kunststoff, Silikonkautschuk, Epoxidharz, Polyester-Melamin modifiziertes Harz, Polyurethan, Alkyd-/Phenolharz" ausgewählte Komponente. Bevorzugt besteht das Imprägnierungspolymer im Wesentlichen aus zumindest einer aus der Gruppe "Polyesterimid, ungesättigtes Polyesterharz, Siliconharz, Epoxidharz, Polyester-Melamin modifiziertes Harz, Polyurethan, Alkyd-/Phenolharz" ausgewählten Komponente. Vorteilhafterweise ist das Polyurethan ein wasserbasiertes Polyurethan. Es hat sich als vorteilhaft herausgestellt, dass das Epoxidharz ein phenol-modifiziertes Epoxidharz ist. Zweckmäßigerweise ist das Imprägnierungspolymer pigmentiert oder pigmentfrei ausgebildet. Gemäß einer Ausführungsform enthält das Imprägnierungspolymer zumindest ein Pigment, beispielsweise Titandioxid. Besonders bevorzugt gibt die Sekundärislolation keine flüchtigen organischen Verbindungen (VOCs) an die Umgehung ab. Empfohlenermaßen ist die Sekundärisolation, vorzugsweise das Polyester-Melamin modifizierte Harz, VOC-frei ausgebildet.

Bevorzugt ist eine Dicke der Haftvermittlerschicht aus dem Haftvermittler geringer als eine Dicke der Primärisolation und/oder eine Dicke der Sekundärisolation. Dicke meint eine Ausdehnung der Primärisolation, der Haftvermittlerschicht bzw. der Sekundärisolation quer zur Längsrichtung des Wickeldrahts. Gemäß einer Ausführungsform verfügt die Primärisolation über eine Dicke von beispielsweise 2 bis 80 µm und vorzugsweise von 4 bis 60 µm. Zweckmäßigerweise weist die Primärisolation eine größere Dicke als die Sekundärisolation auf. Alternativ weist die Sekundärisolation eine größere Dicke als die Primärisolation auf.

Empfohlenermaßen ist auf der äußeren Oberfläche der Sekundärisolation eine Schutzschicht angeordnet. Äußere Oberfläche der Sekundärisolation meint im Rahmen der Erfindung eine dem Haftvermittler und/oder der Primärisolation abgewandte und vorzugsweise für einen Betrachter sichtbare Oberfläche der Sekundärisolation. Liegen mehrere Wicklungen des mit der Primärisolation, dem Haftvermittler und der Sekundärisolation beschichteten Lackdrahtes beispielsweise auf einem Wickelkern nebeneinander, wird die äußere Oberfläche der Sekundärisolation der nebeneinander liegenden Lackdrahtwicklungen vollständig bzw. im Wesentlichen vollständig von der Vergussmasse bedeckt.

Weiterhin lehrt die Erfindung zur Lösung des technischen Problems ein Verfahren zur Herstellung eines Wickelkörpers mit einer Vielzahl von Wicklungen eines Lackdrahts, wobei eine Oberfläche eines eine Seele des Lackdrahts bildenden Wickeldrahts vollständig bzw. im Wesentlichen vollständig mit einer Primärisolation aus einem Lackpolymer beschichtet wird, wobei vorzugsweise der Wickelkörper zumindest eine Wicklung des zumindest mit der Primärisolation beschichteten Wickeldrahts aufweist, wobei eine äußere Oberfläche der Primärisolation des mit der Primärisolation beschichteten Wickeldrahts bereichsweise mit einer Sekundärisolation aus einem Imprägnierungspolymer vorzugsweise zur Ausbildung des Lackdrahts beschichtet wird, wobei zwischen der äußeren Oberfläche der Primärisolation und der Sekundärisolation bereichsweise eine Haftvermittlerschicht aus einem Haftvermittler angeordnet wird, wobei das Imprägnierungspolymer zumindest eine aus der Gruppe "Polyesterimidharz, ungesättigtes Polyesterharz, Silikonharz, silikonhaltiger Kunststoff, Silikonkautschuk, Epoxidharz, Polyester-Melamin modifiziertes Harz, Polyurethan, Alkyd-/Phenolharz" ausgewählte Komponente beinhaltet und wobei der Haftvermittler zumindest eine aus der Gruppe "Polyesterharz, Polyolefin, Polyurethan, organisch funktionalisiertes Silan, aminofunktionelles Alkoxysilan, Polyethylenimin, aromatisches Polyethylenimin, aromatisches Polyisocyanurat, Epoxidharz, Silan, Siloxan, Aminosiloxan" ausgewählte Komponente beinhaltet.

Grundsätzlich ist es möglich, dass der Haftvermittler in die Primärisolation und/oder Sekundärisolation eingebracht wird. Vorteilhafterweise wird zunächst die Primärisolation auf den Wickeldraht aufgebracht. Zweckmäßigerweise wird eine Vielzahl von Wicklungen des mit der Primärisolation beschichteten Wickeldrahts erzeugt. Es ist möglich, dass der Wickelkörper einen Wickelkern aufweist, um welchen Wickelkern der Wickeldraht gewickelt wird oder dass der Wickelkörper wickelkernfrei ausgebildet ist. Auf die Primärisolation des vorzugsweise verwickelten Wickeldrahts wird empfohlenermaßen dann bereichsweise die Haftvermittlerschicht aus dem Haftvermittler aufgetragen, woraufhin vorzugsweise danach die Sekundärisolation auf die Haftvermittlerschicht aufgetragen wird.

Bevorzugt wird die Primärisolation auf dem Wickeldraht gebildet, indem beispielsweise ein Nasslack auf den Wickeldraht bevorzugt in einem Lackbad aufgetragen wird. Grundsätzlich ist es möglich, den Nasslack mittels eines Lackstifts auf den Wickeldraht aufzubringen. Vorteilhafterweise wird überschüssiger, von dem Wickeldraht aufgenommener Nasslack im Rahmen der Erfindung mittels einer Lackdüse von dem Wickeldraht abgestriffen. Gemäß einer Ausführungsform wird der mit dem Nasslack beschichtete Wickeldraht erwärmt, wobei in dem Nasslack enthaltene Lösungsmittel entfernt und/oder in dem Nasslack enthaltene Lackpolymergrundstoffen zur Ausbildung des Lackpolymers polymerisiert werden. Gemäß einer bevorzugten Ausführungsform wird der mit dem Nasslack beschichtete Wickeldraht mit der Maßgabe erwärmt, dass bevorzugt ein Lösungsmittel, welches Lösungsmittel zusammen mit dem Lackpolymer den Nasslack bildet, lediglich verdampft wird, wodurch die Schicht aus dem Lackpolymer bzw. die Primärisolation gebildet wird. Es ist möglich, dass eine Vielzahl von Lackpolymerschichten zur Ausbildung der Primärisolation auf den Wickeldraht aufgebracht werden.

Zweckmäßigerweise wird der mit der Primärisolation beschichtete Wickeldraht mit dem Haftvermittler getränkt und/oder beträufelt. Gemäß einer Ausführungsform wird der mit der Primärisolation beschichtete Wickeldraht mit dem Haftvermittler besprüht. Besonders bevorzugt wird der Haftvermittler auf die Primärisolation aufgetragen, wenn ein Wickelvorgang zur Herstellung einer Wicklung des die Primärisolation aufweisenden Wickeldrahts vorzugsweise auf den Wickelkern abgeschlossen ist. Es ist möglich, dass lediglich eine von dem Wickelkern wegweisende bzw. eine bevorzugt für einen Betrachter sichtbare Oberfläche der Primärisolation mit dem Haftvermittler benetzt wird. Grundsätzlich ist es möglich, dass ein Großteil der Länge des mit der Primärisolation beschichteten Wickeldrahts mit dem Haftvermittler benetzt bzw. beschichtet wird. Bevorzugt wird der mit dem Haftvermittler beschichtete Wickeldraht zur Aktivierung des Haftvermittlers erwärmt. Auf diese Weise wird die Haftvermittlerschicht vorzugsweise auf einer dem Wickelkern bzw. auf einer einem von den Wicklungen umgebenen Hohlraum abgewandten Oberfläche des Wickeldrahtes aktiviert. Besonders bevorzugt wird der Haftvermittler auf einen Abschnitt der äußeren Oberfläche des Wickeldrahtes aufgetragen, welcher Abschnitt der äußeren Oberfläche unbedeckt bzw. frei ist. Dass der Abschnitt der äußeren Oberfläche frei bzw. unbedeckt ist, meint im Rahmen der Erfindung, dass auf dem Abschnitt der äußeren Oberfläche keine weiteren Wicklungen des Wickeldrahtes bzw. Lackdrahtes abgelegt sind. Der Abschnitt der äußeren Oberfläche ist vorzugsweise der beispielsweise für einen Betrachter sichtbare Abschnitt der Oberfläche des mit der Primärisolation beschichteten Wickeldrahtes. Besonders bevorzugt wird der Haftvermittler lediglich auf den unbedeckten Abschnitt der äußeren Oberfläche des mit der Primärisolation beschichteten Wickeldrahtes aufgetragen.

Es liegt im Rahmen der Erfindung, dass die Sekundärisolation durch ein aus der Gruppe "Tränken, Tauchrollierverfahren, Träufelverfahren, Strom-UV-Verfahren, induktives Heißtauchverfahren, Heiß-Tauchverfahren mit UV-unterstützter Härtung, Vollverguss, Vakuumimprägnierverfahren, Vakuum-Druck-Imprägnierung, Druckimprägnierung" ausgewähltes Verfahren auf die Primärisolation aufgetragen wird. Besonders bevorzugt wird die Sekundärisolation mit der Maßgabe auf die mit dem Haftvermittler beschichtete Primärisolation aufgetragen, dass Lufteinschlüsse zwischen den Wicklungen der Spule ausgeschlossen werden. Infolgedessen zeichnet sich eine mit dem erfindungsgemäßen Verfahren hergestellte Spule durch eine besondere elektrische Festigkeit aus.

Weiterhin lehrt die Erfindung zur Lösung des technischen Problems einen Wickelkörper, insbesondere eine Spule, mit vorzugsweise einem Wickelkern, mit zumindest einer Wicklung eines Lackdrahts, vorzugsweise eines Lackdrahts nach einem der Ansprüche 1 bis 7, wobei eine Oberfläche eines eine Seele des Lackdrahts bildenden Wickeldrahts vollständig bzw. im Wesentlichen vollständig mit einer Primärisolation aus einem Lackpolymer beschichtet ist, wobei auf einer äußeren Oberfläche der Primärisolation eine Sekundärisolation aus einem Imprägnierungspolymer zur Ausbildung des Lackdrahtes angeordnet ist, wobei zwischen der Primärisolation und der Sekundärisolation zumindest bereichsweise eine Haftvermittlerschicht aus einem Haftvermittler angeordnet ist, wobei das Imprägnierungspolymer zumindest eine aus der Gruppe "Polyesterimidharz, ungesättigtes Polyesterharz, Silikonharz, silikonhaltiger Kunststoff, Silikonkautschuk, Epoxidharz, Polyester-Melamin modifiziertes Harz, Polyurethan, Alkyd-/Phenolharz" ausgewählte Komponente beinhaltet und wobei der Haftvermittler zumindest eine aus der Gruppe "Polyesterharz, Polyolefin, Polyurethan, organisch funktionalisiertes Silan, aminofunktionelles Alkoxysilan, Polyethylenimin, aromatisches Polyethylenimin, aromatisches Polyisocyanurat, Epoxidharz, Silan, Siloxan, Aminosiloxan" ausgewählte Komponente beinhaltet.

Es ist möglich, dass der Haftvermittler in der Primärisolation und/oder in der Sekundärisolation angeordnet ist. Besonders bevorzugt weist der Wickelkörper eine Vielzahl von Wicklungen des mit der Primärisolation beschichteten Wickeldrahts bzw. des Lackdrahts auf. Zweckmäßigerweise bilden bevorzugt in Längsrichtung der Wickelachse des Wickelkörpers nebeneinander angeordnete Wicklungen des mit der Primärisolation beschichteten Wickeldrahts bzw. des Lackdrahts eine Lage aus. Es liegt im Rahmen der Erfindung, dass vorzugsweise eine Mehrzahl bzw. Vielzahl von Lagen der Wicklungen des mit der Primärisolation beschichteten Wickeldrahts bzw. des Lackdrahts schichtenweise übereinander angeordnet sind. Nach Beendigung des Wickelvorgangs wird vorzugsweise eine äußerste Schicht der Wicklungen des mit der Primärisolation beschichteten Wickeldrahts mit dem Haftvermittler beschichtet. Äußerste Schicht meint im Rahmen der Erfindung eine Lage des mit der Primärisolation beschichteten Wickeldrahts, welche Lage die für einen Betrachter sichtbare Oberfläche des Wickelkörpers darstellt. Es ist möglich, dass der Haftvermittler beispielsweise bei der Beschichtung des mit der Primärisolation beschichteten Wickeldrahts bzw. des Wickelkörpers in zwischen zwei benachbarten Wicklungen angeordnete Zwischenräume eindringt. Vorzugsweise sind innenliegende Wicklungen zumindest bereichsweise mit dem Haftvermittler beschichtet. Innenliegende Wicklungen meint Abschnitte und/oder Lagen des mit der Primärisolation beschichteten Wickeldrahtes, welche Abschnitte und/oder Lagen zwischen der vorzugsweise für den Betrachter sichtbaren äußersten Schicht der Wicklungen und einem Hohlraum bzw. Wickelkern des Wickelkörpers angeordnet sind. Es ist möglich, dass der mit der Primärisolation beschichtete Wickeldraht lediglich abschnittsweise mit dem Haftvermittler beschichtet ist.

Zweckmäßigerweise bedeckt die Sekundärisolation lediglich die äußerste Schicht der Wicklungen. Es ist möglich, dass das die Sekundärisolation bildende Imprägnierungspolymer in zwischen den Wicklungen ausgebildete Zwischenräume eindringt und auf diese Weise auf einer von der Primärisolation und/oder dem Haftvermittler gebildeten Oberfläche innerer Wicklungen angeordnet ist.

Gemäß einer Ausführungsform ist das Imprägnierungspolymer bzw. die Sekundärisolation mit der Maßgabe auf den mit der Primärisolation beschichteten Wickeldraht hergestellten Wickelkörper aufgetragen, dass der Lackdraht entlang seiner vollständigen Länge vollständig bzw. im Wesentlichen vollständig mit der Sekundärisolation beschichtet ist. Besonders bevorzugt erfolgt der Auftrag des Haftvermittlers und/oder der Sekundärisolation derart, dass die zwischen den Wicklungen vorhandenen Zwischenräume lufteinschlussfrei besonders bevorzugt mit der Sekundärisolation verfüllt sind.

Der Erfindung liegt die Erkenntnis zugrunde, dass mit dem erfindungsgemäßen Lackdraht und dem erfindungsgemäßen Verfahren ein aus einer Vielzahl von Lackdrahtwicklungen bestehender Wickelkörper herstellbar ist, wobei sich die Lackdrahtwicklungen durch eine vorteilhaft hohe Wickeldichte auszeichnen. Bedingt durch den geringen Gleitreibungskoeffizienten der Primärisolation des erfindungsgemäßen Lackdrahts wird eine gleichmäßige Verteilung der Lackdrahtwicklungen in einer Lage sichergestellt, indem unpräzise abgelegten Lackdrahtwicklungen ein Gleiten in die korrekte Position entlang eines bereits auf den Wickelkörper befindlichen Lackdrahtabschnitts ermöglicht wird. Im Ergebnis ist ein präzises Verwickeln des Lackdrahts zur Ausbildung von Wickelkörpern, vorzugsweise von Spulen, mit einer hohen Dichte der Lackdrahtwicklungen möglich. In vorteilhafter Weise erfolgt mit dem erfindungsgemäßen Verfahren eine zuverlässige Stabilisierung der den Wickelkörper bildenden Lackdrahtwindungen mit der Sekundärisolation, obwohl sich die Primärisolation durch einen äußerst geringen Gleitreibungskoeffizienten auszeichnet. Mit der zwischen der Primärisolation und der Sekundärisolation angeordneten Haftvermittlerschicht wird die Sekundärisolation zuverlässig und dauerhaft mit der Primärisolation verbunden. Ein mit dem erfindungsgemäßen Verfahren und dem erfindungsgemäßen Lackdraht hergestellter Wickelkörper zeichnet sich durch eine unerwartete mechanische Beständigkeit und elektrische Festigkeit aus. Dadurch, dass durch die Verwirklichung der erfindungsgemäßen Merkmalskombination die Dichte der Lackdrahtwicklungen optimiert ist, zeichnen sich die mit dem erfindungsgemäßen Verfahren hergestellten Wickelkörper durch eine verbesserte Leistungsfähigkeit gegenüber den aus dem Stand der Technik bekannten Spulen aus. Es hat sich gezeigt, dass das erfindungsgemäße Verfahren auf bereits bestehenden Anlagen ausführbar ist, weswegen sich das erfindungsgemäße Verfahren auch durch eine besondere Wirtschaftlichkeit auszeichnet.

Nachfolgend wird die Erfindung anhand einer lediglich ein Ausführungsbeispiel darstellenden Zeichnung ergänzend erläutert.

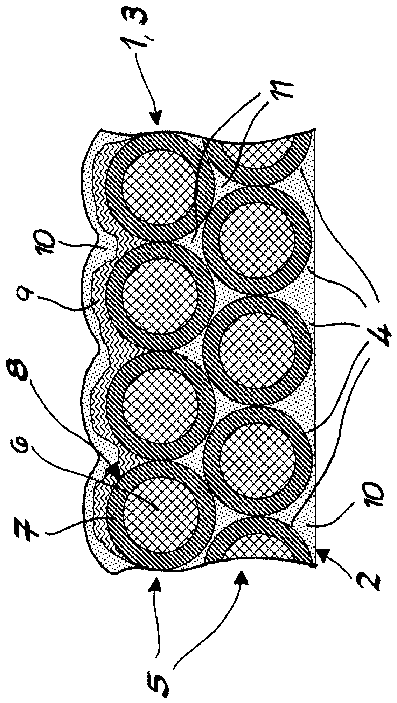

Die einzige Figur zeigt einen Querschnitt durch Lackdrahtwicklungen eines Wickel körpers.

In der Figur ist ein Wickelkörper 2 dargestellt, wobei der Wickelkörper 2 eine Vielzahl von einem Lackdraht 1 gebildeten Lackdrahtwicklungen 3 aufweist. In der Figur ist erkennbar, dass nebeneinander liegende Lackdrahtwicklungen 3 eine Lage 4 bilden. Weiterhin ist in der Figur dargestellt, dass mehrere Schichten 5 von verschiedenen Lagen 4, welche Lagen 4 jeweils aus Lackdrahtwicklungen 3 gebildet sind, übereinander angeordnet sind. Ergänzend ist dargestellt, dass der Lackdraht 1 eine Seele 6 aufweist, die vorzugsweise und in dem Ausführungsbeispiel aus Kupfer gebildet ist. Die Seele 6 ist von einem als Primärisolation 7 ausgebildeten Mantel vollständig umgeben, welche Primärisolation 7 sich gemäß dem Ausführungsbeispiel entlang der vollständigen Länge des Lackdrahts 1 erstreckt. Weiterhin ist in der Figur gezeigt, dass auf einer äußeren Oberfläche 8 der Primärisolation 7, welche äußere Oberfläche 8 eine dem Wickelkern 2 abgewandte Oberfläche der Lackdrahtwicklungen 3 darstellt, eine aus einem Haftvermittler 9 und einer Sekundärisolation 10 gebildete Beschichtung aufgebracht ist. Der Haftvermittler 9 stellt gemäß dem Ausführungsbeispiel sicher, dass die Sekundärisolation 10 zuverlässig und dauerhaft mit der Primärisolation 7 des Lackdrahtes 1 verbunden ist.

Weiterhin ist in der Figur gezeigt, dass ein die Sekundärisolation 10 bildendes Imprägnierungspolymer zwischen den Lackdrahtwicklungen 3 vorhandene Zwischenräume 11 vollständig ausfüllt. Vorzugsweise und gemäß der Figur verdrängt die Sekundärisolation 10 in den Zwischenräumen 11 vorhandene Luft, so dass die Zwischenräume 11 lufteinschlussfrei bzw. gaseinschlussfrei mit der Sekundärisolation 10 verfüllt sind.

## Patentansprüche

1. Lackdraht, insbesondere Kupferlackdraht, wobei eine Oberfläche eines eine Seele (6) des Lackdrahts (1) bildenden Wickeldrahts vollständig bzw. im Wesentlichen vollständig mit einer Primärisolation (7) aus einem Lackpolymer beschichtet ist, wobei eine äußere Oberfläche (8) der Primärisolation (7) bereichsweise mit einer Sekundärisolation (10) aus einem Imprägnierungspolymer beschichtet ist, wobei bereichsweise zwischen der Primärisolation (7) und der Sekundärisolation (10) eine Haftvermittlerschicht (9) aus einem Haftvermittler angeordnet ist, wobei das Imprägnierungspolymer zumindest eine aus der Gruppe "Polyesterimidharz, ungesättigtes Polyesterharz, Silikonharz, silikonhaltiger Kunststoff, Silikonkautschuk, Epoxidharz, Polyester-Melamin modifiziertes Harz, Polyurethan, Alkyd-/Phenolharz" ausgewählte Komponente beinhaltet
und wobei der Haftvermittler zumindest eine aus der Gruppe "Polyesterharz, Polyolefin, Polyurethan, organisch funktionalisiertes Silan, aminofunktionelles Alkoxysilan, Polyethylenimin, aromatisches Polyethylenimin, aromatisches Polyisocyanurat, Epoxidharz, Silan, Siloxan, Aminosiloxan" ausgewählte Komponente beinhaltet.

2. Lackdraht nach Anspruch 1, wobei das Lackpolymer zumindest eine aus der Gruppe "Polyurethan, Polyester, Polyamidimid, Polyamid, Polyimid, Imid-modifiziertes Polyamidimid, Wachs-modifiziertes Polyamidimid, Polytetrafluorethylen-modifiziertes Polyamidimid, Schichtsilikat-modifizierter Lack" ausgewählte Komponente umfasst.

3. Lackdraht nach einem der Ansprüche 1 oder 2, wobei die Dicke der Haftvermittlerschicht (9) aus dem Haftvermittler geringer ist als die Dicke der Primärisolation (7) und/oder geringer ist als die Dicke der Sekundärisolation (10).

4. Verfahren zur Herstellung eines Wickelkörpers mit einem Lackdraht (1), insbesondere eines Lackdrahts (1) nach einem der Ansprüche 1 bis 3, vorzugsweise einer Spule mit zumindest einer Wicklung (3) des Lackdrahts (1), wobei eine Oberfläche eines eine Seele (6) des Lackdrahtes (1) bildenden Wickeldrahtes vollständig bzw. im Wesentlichen vollständig mit einer Primärisolation (7) aus einem Lackpolymer (1) beschichtet wird, wobei der Wickelkörper (2) zumindest eine Wicklung (3) des zumindest mit der Primärisolation (7) beschichteten Wickeldrahts aufweist, wobei eine äußere Oberfläche (8) der Primärisolation (7) der Wicklung des Wickeldrahts bereichsweise mit einer Sekundärisolation (10) aus einem Imprägnierungspolymer vorzugsweise zur Ausbildung des Lackdrahts (1) beschichtet wird, wobei zwischen der Primärisolation (7) und der Sekundärisolation (10) des Lackdrahts (1) zumindest bereichsweise eine Haftvermittlerschicht (9) aus einem Haftvermittler angeordnet wird, wobei das Imprägnierungspolymer zumindest eine aus der Gruppe "Polyesterimidharz, ungesättigtes Polyesterharz, Silikonharz, silikonhaltiger Kunststoff, Silikonkautschuk, Epoxidharz, Polyester-Melamin modifiziertes Harz, Polyurethan, Alkyd-/Phenolharz" ausgewählte Komponente beinhaltet,
und wobei der Haftvermittler zumindest eine aus der Gruppe "Polyesterharz, Polyolefin, Polyurethan, organisch funktionalisiertes Silan, aminofunktionelles Alkoxysilan, Polyethylenimin, aromatisches Polyethylenimin, aromatisches Polyisocyanurat, Epoxidharz, Silan, Siloxan, Aminosiloxan" ausgewählte Komponente beinhaltet.

5. Verfahren nach Anspruch 4, wobei der mit der Primärisolation (7) beschichtete Wickeldraht mit dem Haftvermittler beschichtet, vorzugsweise getränkt und/oder beträufelt und/oder besprüht wird.

6. Verfahren nach einem der Ansprüche 4 oder 5, wobei der mit dem Haftvermittler beschichtete Wickeldraht zur Aktivierung des Haftvermittlers erwärmt wird.

7. Verfahren nach einem der Ansprüche 4 bis 6, wobei die Sekundärisolation (10) durch ein aus der Gruppe "Tränkung, Tauchrollierverfahren, Träufelverfahren, Strom-UV-Verfahren, induktives Heißtauchverfahren, Heiß-Tauchverfahren mit UV-unterstützter Härtung, Vollverguss, Vakuumimprägnierung, Vakuum-Druck-Imprägnierung, Druck-Imprägnierung" ausgewähltes Verfahren auf die Primärisolation (7) und/oder den Haftvermittler aufgetragen wird.

8. Wickelkörper, insbesondere Spule mit vorzugsweise einem Wickelkern (2), mit zumindest einer Wicklung (3) eines Lackdrahts (1), vorzugsweise eines Lackdrahts (1) nach einem der Ansprüche 1 bis 3, wobei eine Oberfläche eines eine Seele des Lackdrahts (1) bildenden Wickeldrahts vollständig bzw. im Wesentlichen vollständig mit einer Primärisolation (7) aus einem Lackpolymer beschichtet ist, wobei auf einer äußeren Oberfläche (8) der Primärisolation (7) eine Sekundärisolation (10) aus einem Imprägnierungspolymer zur Ausbildung des Lackdrahts (1) angeordnet ist, **dadurch gekennzeichnet, dass** zwischen der Primärisolation (7) und der Sekundärisolation (10) zumindest bereichsweise eine Haftvermittlerschicht (9) aus einem Haftvermittler angeordnet ist, wobei das Imprägnierungspolymer zumindest eine aus der Gruppe "Polyesterimidharz, ungesättigtes Polyesterharz, Silikonharz, silikonhaltiger Kunststoff, Silikonkautschuk, Epoxidharz, Polyester-Melamin modifiziertes Harz, Polyurethan, Alkyd-/Phenolharz" ausgewählte Komponente beinhaltet,
und wobei der Haftvermittler zumindest eine aus der Gruppe "Polyesterharz, Polyolefin, Polyurethan, organisch funktionalisiertes Silan, aminofunktionelles Alkoxysilan, Polyethylenimin, aromatisches Polyethylenimin, aromatisches Polyisocyanurat, Epoxidharz, Silan, Siloxan, Aminosiloxan" ausgewählte Komponente beinhaltet.

## Claims

1. An enamelled wire, in particular enamelled copper wire, wherein one surface of a winding wire which forms the core (6) of the enamelled wire (1) is completely or substantially completely coated with a primary insulation (7) made from a coating polymer, wherein an outer surface (8) of the primary insulation (7) is coated in regions with a secondary insulation (10) of an impregnation polymer, wherein an adhesion promoting layer (9) consisting of an adhesion promoter is arranged at least in regions between the primary insulation (7) and the secondary insulation (10), wherein the impregnation polymer contains at least one component selected from the group "polyester-imide resin, unsaturated polyester resin, silicone resin, silicone-containing plastic, silicone rubber, epoxy resin, polyester melamine modified resin, polyurethane, alkyd/phenolic resin"
and wherein the adhesion promoter contains at least one component selected from the group "polyester resin, polyolefin, polyurethane, organically functionalised silane, amino-functional alkoxysilane, polyethyleneimine, aromatic polyethyleneimine, aromatic polyisocyanurate, epoxy resin, silane, siloxane, aminosiloxane".

2. The enamelled wire according to claim 1, wherein the coating polymer comprises at least one component selected from the group "polyurethane, polyester, polyamide-imide, polyamide, polyimide, imide-modified polyamide-imide, wax-modified polyamide-imide, polytetrafluoroethylene-modified polyamide-imide, phyllosilicate-modified coating".

3. The enamelled wire according to either of claims 1 or 2, wherein the thickness of the adhesion promoting layer (9) consisting of adhesion promoter is less than the thickness of the primary insulation (7) and/or less than the thickness of the secondary insulation (10) .

4. A method for producing a bobbin with an enamelled wire (1), in particular an enamelled wire (1) according to one of claims 1 to 3, preferably a coil having at least one winding (3) of the enamelled wire (1), wherein one surface of a winding wire which forms the core (6) of the enamelled wire (1) is completely or substantially completely coated with a primary insulation (7) made from a coating polymer (1), wherein the bobbin (2) has at least one winding (3) of the winding wire which is coated with the primary insulation (7), wherein an outer surface (8) of the primary insulation (7) of the winding of the winding wire is coated in regions with a secondary insulation (10) consisting of an impregnation polymer preferably to form the enamelled wire (1), wherein an adhesion promoting layer (9) consisting of an adhesion promoter is arranged at least in regions between the primary insulation (7) and the secondary insulation (10) of the enamelled wire (1), wherein the impregnation polymer contains at least one component selected from the group "polyester-imide resin, unsaturated polyester resin, silicone resin, silicone-containing plastic, silicone rubber, epoxy resin, polyester-melamine modified resin, polyurethane, alkyd/phenolic resin"
and wherein the adhesion promoter contains at least one component selected from the group "polyester resin, polyolefin, polyurethane, organically functionalised silane, amino-functional alkoxysilane,
polyethyleneimine, aromatic polyethyleneimine, aromatic polyisocyanurate, epoxy resin, silane, siloxane, aminosiloxane".

5. The method according to claim 4, wherein the winding wire coated with the primary insulation (7) is coated, preferably impregnated and/or trickled and/or sprayed with the adhesion promoter.

6. The method according to either of claims 4 or 5, wherein the winding wire coated with the adhesion promoter is heated to activate the adhesion promoter.

7. The method according to any one of claims 4 to 6, wherein the secondary insulation (10) is applied to the primary insulation (7) and/or to the adhesion promoter by a method selected from the group "impregnation, dip-rolling process, trickle impregnation, flow-UV method, inductive hot dipping method, hot-dipping method with UV-supported curing, solid casting, vacuum impregnation, vacuum pressure impregnation, pressure impregnation".

8. A wound body, in particular a coil preferably having a winding core (2), with at least one winding (3) of an enamelled wire (1), preferably an enamel wire (1) according to any one of claims 1 to 3, wherein one surface of a winding wire which forms a core of the enamelled wire (1) is completely or substantially completely coated with a primary insulation (7) made from a coating polymer, wherein a secondary insulation (10) consisting of an impregnation polymer is disposed on an outer surface (8) of the primary insulation (7) to form the enamelled wire (1), **characterized in that** an adhesion promoting layer (9) consisting of an adhesion promoter is arranged at least in regions between the primary insulation (7) and the secondary insulation (10), wherein the impregnation polymer contains at least one component selected from the group "polyester-imide resin, unsaturated polyester resin, silicone resin, silicone-containing plastic, silicone rubber, epoxy resin, polyester-melamine modified resin, polyurethane, alkyd/phenolic resin",
and wherein the adhesion promoter contains at least one component selected from the group "polyester resin, polyolefin, polyurethane, organically functionalised silane, amino-functional alkoxysilane, polyethyleneimine, aromatic polyethyleneimine, aromatic polyisocyanurate, epoxy resin, silane, siloxane, aminosiloxane".

## Revendications

1. Fil verni, notamment fil verni en cuivre, une surface d'un fil de bobinage formant une âme (6) du fil verni (1) étant revêtue intégralement ou sensiblement intégralement d'une isolation primaire (7) composée d'un vernis polymère, une surface externe (8) de l'isolation primaire (7) étant revêtue par endroits d'une isolation secondaire (10) composée d'un polymère d'imprégnation, par endroits, entre l'isolation primaire (7) et l'isolation secondaire (10) étant disposée une couche d'agent adhésif (9) composée d'un agent adhésif, le polymère d'imprégnation contenant au moins un composant choisi dans le groupe comprenant « une résine de polyesterimide, une résine de polyester insaturée, une résine de silicone, une matière plastique siliconée, un caoutchouc de silicone, une résine époxy, une résine polyester-mélamine modifiée, un polyuréthane, une résine alkyde/phénolique » et l'agent adhésif contenant au moins un composant choisi dans le groupe comprenant : une résine de polyester, une polyoléfine, un polyuréthane, un silane organiquement fonctionnalisé, un alkoxysilane aminofonctionnel, un polyéthylènimine, un polyéthylènimine aromatique, un polyisocyanurate aromatique, une résine époxy, un silane, un siloxane, un aminosiloxane ».

2. Fil verni selon la revendication 1, le vernis polymère comprenant au moins un composant choisi dans le groupe comprenant « un polyuréthane, un polyester, un polyamidimide, un polyamide, un polyimide, un polyamidimide modifié imide, un polyamidimide modifié cire, un polyamidimide modifié polytétrafluoréthylène, un vernis modifié phyllosilicate ».

3. Fil verni selon l'une quelconque des revendications 1 ou 2, l'épaisseur de la couche d'agent adhésif (9) composée de l'agent adhésif étant inférieure à l'épaisseur de l'isolation primaire (7) et/ou inférieure à l'épaisseur de l'isolation secondaire (10) .

4. Procédé, destiné à fabriquer un corps bobiné comprenant un fil verni (1), notamment un fil verni (1) selon l'une quelconque des revendications 1 à 3, de préférence une bobine comportant au moins un bobinage (3) du fil verni (1), une surface d'un fil de bobinage formant une âme (6) du fil verni (1) étant revêtue intégralement ou sensiblement intégralement d'une isolation primaire (7) composée d'un vernis polymère (1), le corps bobiné (2) comportant au moins un bobinage (3) du fil de bobinage revêtu au moins de l'isolation primaire (7), une surface externe (8) de l'isolation primaire (7) du bobinage du fil de bobinage étant revêtue par endroits d'une isolation secondaire (10) composée d'un polymère d'imprégnation, de préférence pour créer le fil verni (1), entre l'isolation primaire (7) et l'isolation secondaire (10) du fil verni (1) étant placée au moins par endroits une couche d'agent adhésif (9) composée d'un agent adhésif, le polymère d'imprégnation contenant au moins un composant choisi dans le groupe comprenant « une résine de polyesterimide, une résine de polyester insaturée, une résine de silicone, une matière plastique siliconée, un caoutchouc de silicone, une résine époxy, une résine polyester-mélamine modifiée, un polyuréthane, une résine alkyde/phénolique » et
l'agent adhésif contenant au moins un composant choisi dans le groupe comprenant une résine de polyester, une polyoléfine, un polyuréthane, un silane organiquement fonctionnalisé, un alkoxysilane aminofonctionnel, un polyéthylènimine, un polyéthylènimine aromatique, un polyisocyanurate aromatique, une résine époxy, un silane, un siloxane, un aminosiloxane ».

5. Procédé selon la revendication 4, lors duquel on revêt, de préférence on imbibe et/ou on arrose et/ou on vaporise le fil de bobinage revêtu de l'isolation primaire (7) avec l'agent adhésif.

6. Procédé selon l'une quelconque des revendications 4 ou 5, lors duquel, pour activer l'agent adhésif, on fait chauffer le fil de bobinage revêtu de l'agent adhésif.

7. Procédé selon l'une quelconque des revendications 4 à 6, lors duquel on applique l'isolation secondaire (10) sur l'isolation primaire (7) et/ou sur l'agent adhésif à l'aide d'un procédé choisi dans le groupe comprenant « une imbibition, un trempé-roulé, un arrosage, un procédé courant UV, un procédé inductif d'immersion à chaud, un procédé d'immersion à chaud avec trempe assistée par UV, un surmoulage complet, une imprégnation sous vide, une imprégnation par pression sous vide, une imprégnation par pression ».

8. Corps bobiné, notamment bobine, pourvue de préférence d'un noyau d'enroulement (2), pourvu d'au moins un bobinage (3) en un fil verni (1), de préférence en un fil verni (1) selon l'une quelconque des revendications 1 à 3, une surface d'un fil de bobinage formant une âme du fil verni (1) étant revêtue intégralement ou sensiblement intégralement d'une isolation primaire (7) composée d'un vernis polymère, sur une surface externe (8) de l'isolation primaire (7) étant placée une isolation secondaire (10) composée d'un polymère d'imprégnation pour créer le fil verni (1), **caractérisé en ce qu'**entre l'isolation primaire (7) et l'isolation secondaire (10) est placée au moins par endroits une couche d'agent adhésif (9) composée d'un agent adhésif, le polymère d'imprégnation contenant au moins un composant choisi dans le groupe comprenant « une résine de polyesterimide, une résine de polyester insaturée, une résine de silicone, une matière plastique siliconée, un caoutchouc de silicone, une résine époxy, une résine polyester-mélamine modifiée, un polyuréthane, une résine alkyde/phénolique » et
l'agent adhésif contenant au moins un composant choisi dans le groupe comprenant une résine de polyester, une polyoléfine, un polyuréthane, un silane organiquement fonctionnalisé, un alkoxysilane aminofonctionnel, un polyéthylènimine, un polyéthylènimine aromatique, un polyisocyanurate aromatique, une résine époxy, un silane, un siloxane, un aminosiloxane ».
